# EUROPEAN PATENT APPLICATION

(11) **EP 1 921 799 A1**
(43) Date of publication of application: **14.05.2008**
(21) Application number: 06741929.1
(22) Date of filing: 19.05.2006
(51) Int. Cl.: H04L 12/26, H04L 12/56

(54) **A METHOD FOR DETECTING THE IPV6 NETWORK APPLICATION LAYER PROTOCOL**

(30) Priority: 31.08.2005 CN 200510036977
(71) Applicant: Huawei Technologies Co., Ltd., Longgang District, Shenzhen, Guangdong 518129 (CN)
(72) Inventor: CHEN, Hongfei, Guangdong 518219 (CN); ZHANG, Jian, Guangdong 518219 (CN)
(74) Representative: Pfenning, Meinig & Partner GbR
(86) International application number: PCT/CN2006/001041
(87) International publication number: WO 2007/025426

(57) **Abstract**

A method for detecting the IPv6 network application layer protocol includes: the node initiating the application layer protocol detection transmits the detection request message to the node responding the application layer protocol detection to request performing the application layer protocol detection; the node responding the application layer protocol detection receives the detection request message and responds the detection response message to the node initiating the application layer protocol detection; the node initiating the application layer protocol detection receives the detection response message, and performs the Ipv6 network application layer protocol messages intercommunion with the node responding the application layer protocol detection, in order to get the performance parameters for evaluating the network protocol running state and the availability parameters for evaluating the network protocol acquisition state further to realize the application layer protocol detection. The invention realizes the detection and the monitoring to all kinds of application layer protocols in the IPv6 network. Thereby the network running state is known over all, and it provides the reliable safeguard for the normal network running.

## Description

### Field of the Invention

The invention relates to Internet Protocol Version 6 (IPv6) network, and in particular, to a method for detecting application layer protocols of an IPv6 network.

### Background of the Invention

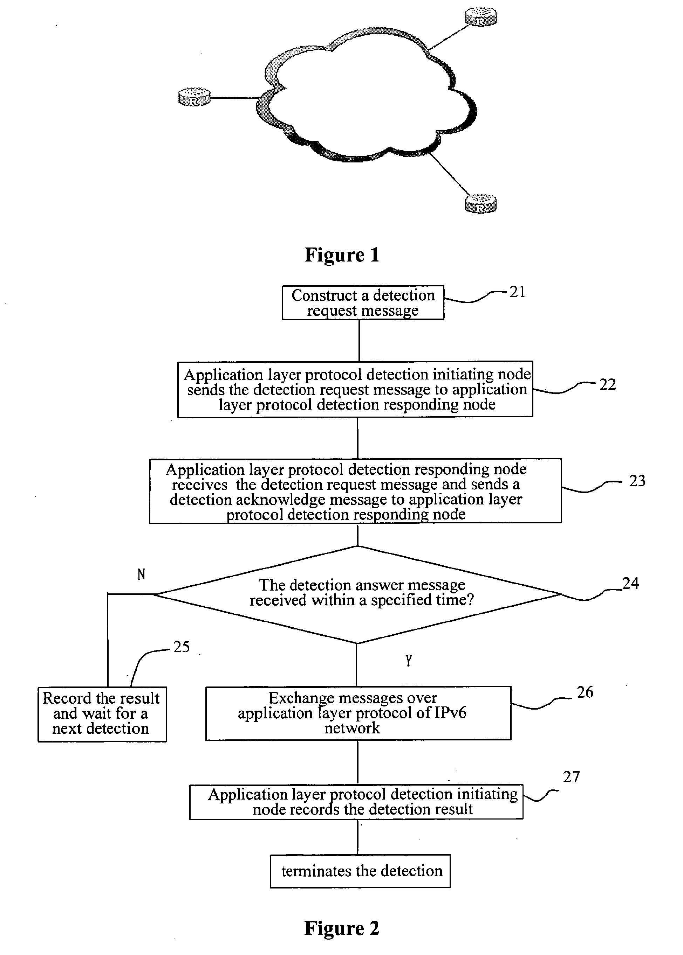

Internet Protocol Version 6 (IPv6) network is a new generation internet. Currently the deployment of and experiments on IPv6 network is being developed gradually in the industry. A variety of related services over IPv6 network are being improved step by step. From the viewpoint of designing, IPv6 network has a larger scale than IPv4 network, and is more complicated. When carrying various services over an IPv6 network, it is required to evaluate the quality of the IPv6 network as well as qualities of the various services, to discover in time whether the quality of service of the IPv6 network is degraded. This may be implemented by detecting the network performance. In existing methods, Ping technique and Trace Route technique are generally employed to detect the network performance. Ping is a technique for detecting network performance and whether a communication channel and equipment work normally. Figure 1 shows an existing IPv6 network model. As shown in Figure 1, Ping command is executed between network node A and network node B to detect the network performance. Firstly, network node A constructs and sends an ICMPv6 (Internet Control Message Protocol Version 6) message to network node B. A router between network nodes A and B performs only the forwarding of the ICMPv6 message. When receiving the ICMPv6 message, network node B constructs an acknowledge message, and sends the acknowledge message back to network node A. Upon receipt of the acknowledge message, network node A may determine that the path between network nodes A and B is normal, and is able to calculate the delay between the two nodes, so as to determine the performance of the network. In practical application, Ping is mainly used to judge whether the network is in connection or disconnection.

In addition, Trace Route is also a technique for link detection. The difference lies in that, in Trace Route technique, a network node initiating a trace sends an increment message to network nodes. The network node of each hop, receiving the increment message by a Hop Limit in the increment message (incremented from 1), returns an ICMPv6 timeout message to the network node initiating the trace. For example, if the address of network node B is traced from network node A, network node B and each of the routers between network nodes A and B return an ICMPv6 message to network node A. When receiving the ICMPv6 message, network node A may determine the status and delay of the link. In practical application, Trace Route is mainly used to locate a fault point.

However, Ping and Trace Route techniques have the following disadvantage:

Ping and Trace Route techniques are able to detect only the reachabilty and performance of IP layer of a network can be detected, but can not detect the conditions of application layer of the network, such as the reachability and performance of File Transfer Protocol (FTP), Transmission Control Protocol (TCP), User datagram Protocol (UDP), Hyper Text Transfer Protocol (HTTP), Simple Network Management Protocol (SNMP) and Dynamic Host Configuration Protocol (DHCP).

### Summary of the Invention

The invention is to provide a method for detecting performance of an IPv6 network, to detect and monitor various application layer protocols in the IPv6 network.

In view of the above, a method for detecting an application layer protocol of an IPv6 network is provided. The IPv6 network includes an application layer protocol detection initiating node and an application layer protocol detection responding node. The method includes:
(a) sending, by the application layer protocol detection initiating node, a detection request message to the application layer protocol detection responding node;
(b) when receiving the detection request message, sending, by the application layer protocol detection responding node, a detection acknowledge message to the application layer protocol detection initiating node in response to the detection request;
(c) when receiving the detection acknowledge message, performing, by the application layer protocol detection initiating node, message interaction over the application layer protocol of the IPv6 network with the application layer protocol detection responding node, to obtain performance parameters for evaluating an operation condition of the application layer protocol and availability parameters for evaluating an availability condition of the application layer protocol, so as to implement application layer protocol detection.

The performance parameters may include: higher layer packet throughput, higher layer service response delay, higher layer authentication delay, higher layer data transfer delay, and higher layer service delay.

The availability parameter may include: connection establishment success rate, service success rate, and service availability.

The detection request message may be constructed according to information of the protocol to be detected, detection starting/ending time, detection frequency, detection period and the application layer protocol detection responding node.

The application layer protocol detection responding node may activate a responding service according to the application layer protocol of the IPv6 network, the detection starting/ending time, the detection frequency, the detection period, and the application layer protocol detection responding node, monitor and receive the detection request message from the application layer protocol detection initiating node.

The application layer protocol detection initiating node may record a detection result, and send a detection terminating request to the application layer protocol detection responding node; the application layer protocol detection responding node may terminate the application layer protocol detection when receiving the detection terminating request.

If the application layer protocol detection initiating node does not receive the detection acknowledge message from the application layer protocol detection responding node within a specified time, the application layer protocol detection initiating node may record the detection result and wait for a next detection.

The application layer protocol detection between, the application layer protocol detection initiating node and the application layer protocol detection responding node is in point-to-point, point-to-multiple-points, multiple-points-to-multiple-points, or multiple-points-to-point manner.

The application layer protocol detection initiating node and the application layer protocol detection responding node may employ a client/server model.

The invention has the following advantages over the prior art:

In the method for detecting performance of an IPv6 network, a client/server model is employed between network nodes, to implement the detection functions of some designated services, to conduct the statistic and query of various types of information generated from the designated services. By transferring application layer protocol detection messages between nodes of the IPv6 network, various application layer protocols in the IPv6 network may be detected and monitored. With the method of the invention, the operation conditions of an IPv6 network may be known in time. Furthermore, an abnormity may be discovered in time once it occurs, so that the user may intervene to remove the abnormity, thereby providing a reliable guarantee for the normal operation of the network.

### Brief Description of the Drawings

Figure 1 shows an existing IPv6 network model;

Figure 2 is a flow chart illustrating a method for detecting application layer protocols of an IPv6 network according to an embodiment of the invention;

Figure 3A-Figure 3D are schematic diagram illustrating a process of detecting an information transferring path in a method for detecting application layer protocols of an IPv6 network according to an embodiment of the invention;

Figure 4 is a detection timing diagram by using a client/server model in a method for detecting application layer protocols of an IPv6 network according to an embodiment of the invention.

### Detailed Description of the Embodiments

Figure 2 is a flow chart illustrating a method for detecting application layer protocols of an IPv6 network according to an embodiment of the invention. As shown in Figure 2, generally an IPv6 network includes a plurality of network nodes. In the invention, the network nodes may be classified into application layer protocol detection initiating node and application layer protocol detection responding node.

In step 21, protocol information to be detected, detection starting and ending time, detection frequency, detection period, and detection responding node(s) are preconfigured. An application layer protocol detection initiating node constructs a detection request message according to the protocol information to be detected, the detection starting and ending time, the detection frequency, the detection period, and the detection responding node(s).

In step 22, the application layer protocol detection initiating node sends the constructed detection request message to an application layer protocol detection responding node, requesting to execute the application layer protocol detection.

In step 23, the application layer protocol detection responding node activates a responding service according to the application layer protocols of the IPv6 network, the detection starting and ending time, the detection frequency, the detection period, and the detection responding node(s), and monitors the detection request message sent from the application layer protocol detection initiating node. When receiving the detection request message sent from the application layer protocol detection initiating node, the application layer protocol detection responding node sends a detection acknowledge message to the application layer protocol detection initiating node in response to the detection request message.

In step 24, the application layer protocol detection initiating node waits for the detection acknowledge message sent back from the application layer protocol detection responding node. If the application layer protocol detection initiating node does not receive the detection acknowledge message within a specified time, the process proceeds to step 25, the application layer protocol detection initiating node records the result, and waits for a next detection. If the application layer protocol detection initiating node receives the detection acknowledge message within the specified time, the process proceeds to step 26, the application layer protocol detection initiating node exchanges messages over the application layer of the IPv6 network with the application layer protocol detection responding node, to obtain performance parameters for evaluating operation conditions of network protocols and availability parameters for evaluating availability conditions of the network protocols, so as to implement the application layer protocol detection. The performance parameters may include Higher layer packet throughput, Higher layer service response delay, Higher layer authentication delay, Higher layer data transfer delay, and Higher layer service delay. The availability parameters may include connection establishment success rate, service success rate, and service availability. Next, the process proceeds to step 27. In step 27, the application layer protocol detection initiating node records the detection result, and the process proceeds to step 28. In step 28, the application layer protocol detection initiating node sends a detection ending request to the application layer protocol detection initiating node. When receiving the detection terminating request, the application layer protocol detection initiating node terminates the detection.

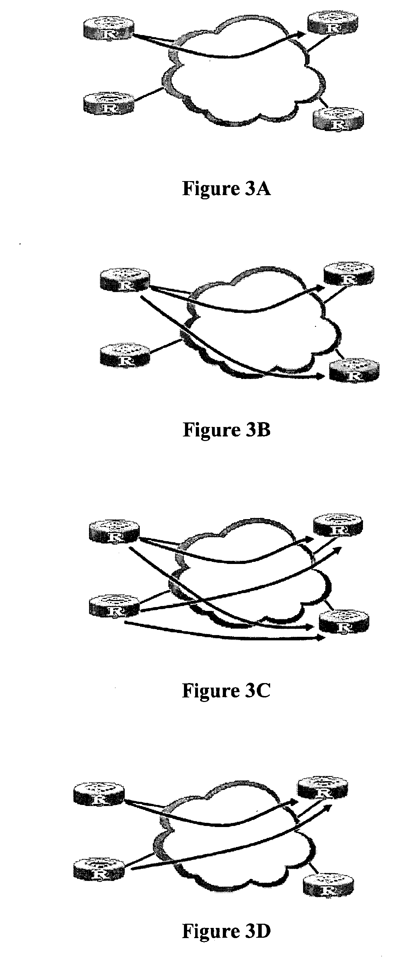

It shall be appreciated that the detection between the application layer protocol detection initiating node and the application layer protocol detection initiating node according to the invention may be implemented in point-to-point, point-to-multiple-points, multiple-points-to-multiple-points, or multiple-points-to-point manner, as shown in Figure 3A to Figure 3D, respectively. In Figure 3A to Figure 3D, the arrowed lines represent paths for transferring detection information.

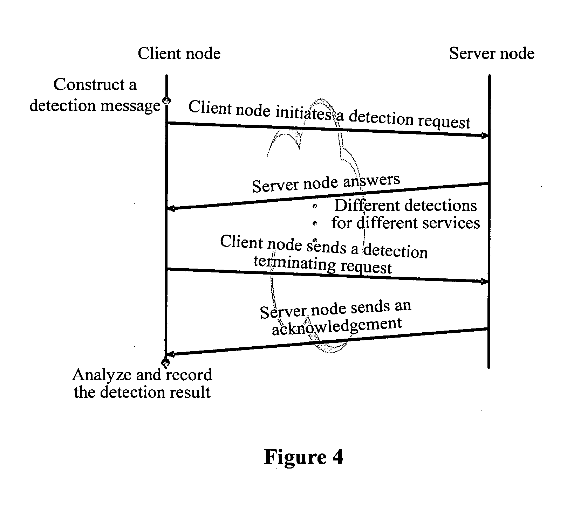

In addition, the invention may employ a client/server model. A client node is adapted to initiate application layer protocol detection, analyze and record a detection result. A server node is adapted to respond to a detection request from the client node, and send an acknowledge message to the client node. The client/server node equipment includes, but not limited to, a router, and layer 2/layer 3 exchange, etc. Figure 4 is a detection timing diagram by using a client/server model in the invention. As shown in Figure 4, first, a client node constructs a detection request message according to application layer protocols to be detected. Then the client node initiates application layer protocol detection. The server node receives the detection request message, and sends a detection acknowledge message to the client node initiating the application layer protocol detection. The client node receives the detection acknowledge message, and exchange messages over the application layer protocols of the IPv6 network with the client node, to obtain performance parameters. Then the client node sends a detection terminating request to the server node. After receiving an acknowledgement from the server node, the client node analyzes and records the detection result.

In summary, with the method for detecting application layer protocols of an IPv6 network, various application layer protocols of the IPv6 network may be detected and monitored, so that the whole operation conditions of the network may be known in time, thereby providing a reliable guarantee for the normal operation of the network.

While some preferred embodiments of the invention have been described above, it should be noted that a person of ordinary skill in the art may recognize various modifications and alterations to the invention without departing from the principle of the invention. Therefore, these modifications and alterations are to be covered within the scope of the invention.

## Claims

1. A method for detecting an application layer protocol of an Internet Protocol version 6, IPv6, network comprising an application layer protocol detection initiating node and an application layer protocol detection responding node, **characterized by** comprising:
(a) sending, by the application layer protocol detection initiating node, a detection request message to the application layer protocol detection responding node;
(b) when receiving the detection request message, sending, by the application layer protocol detection responding node, a detection acknowledge message to the application layer protocol detection initiating node in response to the detection request, and
(c) when receiving the detection acknowledge message, exchanging, by the application layer protocol detection initiating node, message over the application layer protocol of the IPv6 network with the application layer protocol detection responding node, to obtain performance parameters for evaluating an operation condition of the application layer protocol and availability parameters for evaluating an availability condition of the application layer protocol, so as to implement application layer protocol detection.

2. The method according to claim 1, **characterized in that** the performance parameters comprise higher layer packet throughput, higher layer service response delay, higher layer authentication delay, higher layer data transfer delay, and higher layer service delay.

3. The method according to claim 1, **characterized in that** the availability parameters comprise connection establishment success rate, service success rate, and service availability.

4. The method according to claim 1, **characterized in that** the detection request message is constructed according to information of the protocol to be detected, detection starting/ending time, detection frequency, detection period and the application layer protocol detection responding node.

5. The method according to claim 1 or 4, **characterized by** further comprising:
activating, by the application layer protocol detection responding node, a responding service according to the application layer protocol of the IPv6 network, detection starting/ending time, detection frequency, detection period, and application layer protocol detection responding node, monitoring and receiving a detection request message from the application layer protocol detection initiating node.

6. The method according to claim 5, **characterized by** further comprising:
recording, by the application layer protocol detection initiating node, a detection result, and sending a detection terminating request to the application layer protocol detection responding node; terminating the application layer protocol detection by the application layer protocol detection responding node when receiving the detection terminating request.

7. The method according to claim 6, **characterized by** further comprising:
recording, by the application layer protocol detection initiating node, the detection result and waiting for a next detection, if the application layer protocol detection initiating node does not receive the detection acknowledge message from the application layer protocol detection responding node within a specified time.

8. The method according to claim 1, **characterized in that** the application layer protocol detection between the application layer protocol detection initiating node and the application layer protocol detection responding node is in point-to-point, point-to-multiple-points, multiple-points-to-multiple-points, or multiple-points-to-point manner.

9. The method according to any one of claims 1-8, **characterized in that** the application layer protocol detection initiating node and the application layer protocol detection responding node employs a client/server model.
